# EUROPEAN PATENT SPECIFICATION

(11) **EP 2 731 764 B1**
(45) Date of publication and mention of the grant of the patent: **14.02.2018**
(21) Application number: 12745651.5
(22) Date of filing: 12.07.2012
(51) Int. Cl.: B27K 3/10, A01G 7/06

(54) **TOOL FOR INSERTION INTO TREES OR SHRUBS AND INJECTION OR INFUSION DEVICE COMPRISING SAID TOOL**
WERKZEUG ZUM EINSETZEN IN BÄUME ODER STRÄUCHER UND INJEKTIONS- ODER INFUSIONSVORRICHTUNG MIT DIESEM WERKZEUG
OUTIL POUR INSERTION DANS UN ARBRE OU UN ARBUSTE ET DISPOSITIF D'INJECTION OU DE PERFUSION COMPRENANT CET OUTIL

(30) Priority: 15.07.2011 IT PD20110245
(43) Date of publication of application: 21.05.2014
(73) Proprietor: Patavium Giardini S.r.l., 35030 Rubano (PD) (IT)
(72) Inventor: MONTECCHIO, Lucio, 31049 Valdobbiadene (IT); RISATO, Diego, 32040 Vigo Di Cadore (IT); PRESTI, Nunzio, 32042 Calalzo Di Cadore (IT)
(74) Representative: Pavan, Andrea
(86) International application number: PCT/EP2012/063680
(87) International publication number: WO 2013/010909

(56) References cited:
- GB-A- 345 694
- NL-C- 130 208
- US-A- 1 583 900
- US-A- 5 239 773
- US-A- 5 797 215

## Description

### Field of the invention

The present invention relates to a tool for insertion into trees or shrubs and an injection or infusion device comprising said tool.

### Background of the invention

In the pesticidal treatment of trees or shrubs or vascular trees in general, hereinafter as a whole referred to as trees, affected by diseases due to organisms directly or indirectly associated to the lymphatic flow (for example, Dutch elm disease, pine processionary, tracheomycosis, foliar anthracnose and other diseases) the practice of infusion, which consists of the application of pesticides or other products inside the vessel system of trees at atmospheric pressure or close thereto has become established. Infusion is generally preferred to the practice of injection, typically performed at pressures much greater than the atmospheric pressure, as more costly and characterised by a greater probability of damage to the plant caused by the forced introduction of fluid, in particular the exploding of vessels or of superficial parts of the plant.

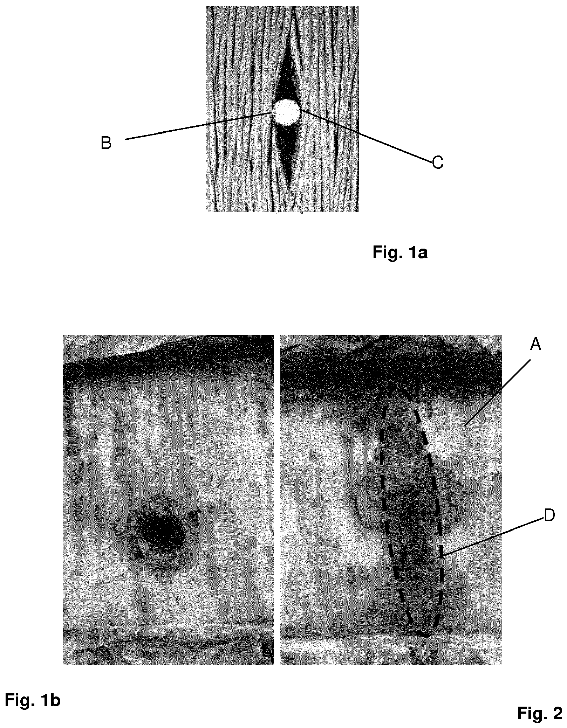

Typically, both the infusion and the injection methods envisage the production of a hole on the tree, for example by means of a rotary punch tool such as a drill bit, o as to produce a cylindrical cavity (figure 1b) for the insertion of an injection or infusion tool, needle-shaped for example, that allows the introduction into the plant of the product contained in a container connected to the injection or infusion tool.

The main drawbacks determined by the aforementioned methods are:
- the removal of a large volume of vital wood from the plant.
- the powerful heating determined by the rotary tool with consequent partial devitalisation of the tissues of the plant assigned to cicatrisation of the wound or of the suber-phelloderm cambium and of the phloem-vascular cambium,
- the slowing down of the cicatrisation process by effect of the minute fragmentation of the suber-phelloderm cambium and the phloem-vascular cambium produced by the rotary tool,
- the emobolisation, or the inlet of air and consequent occlusion of the vessels of the plant with consequent physiological damage and detriment to the infusion itself,
- the partial filling with resin of the hole produced, in the event of the treated plant being a conifer. Such filling takes place rapidly, making the operation at least partially ineffective,
- the high probability of channelling, within the healthy tissues, any parasites present on the cortical tissues and partially transported inside the plant by the rotary tool.

Other methods, for example the method described in the published patent application US2004/025420, envisaging the use of an axially perforated tool used both in the insertion phase and in the injection or infusion phase. An example of a tool and a device is also disclosed in the patent NL130208. A device with injection fluid retention plug is disclosed in US5797215. With reference to US2004/025420 the insertion takes place via the application of an axial thrust force, but without putting the tool into rotation. The tool used comprises an elongated body having a circular section that is introduced into the plant. The main drawback of this solution is represented by the fact that a tool having a circular section is subject to high resistant forces on the part of the plant in each of the insertion and extraction phases, thus resulting in widespread rupture of vessels of the plant. In addition, the circular section concentrates the attrition produced in the insertion and extraction phases on very limited surface portions (indicated by B and C in figure 1a) of the plant tissue, with consequent rupture of the tissues, embolisation of the vessels and release of resin.

### Summary

The object of the present invention is to provide a device for trees, capable of overcoming the drawbacks reported with reference to the cited prior art, generating limited damage to trees, that are in any case repairable by the normal cicatrisation processes of the suber-phelloderm and phloem-vascular cambiums. Another object is that of making available a device of the abovementioned type that can also be used as a means of infusing or injecting fluids into trees.

A further object is that of providing a device for injecting or infusing fluids into trees that is easy and practical to use, comprising the abovementioned tool.

In accordance with the invention, the above technical problem is resolved by a device for insertion into trees having the characteristics as claimed in independent claim 1. The present invention therefore allows the obtainment of a device that is easy and practical to use, which does not require supplementary power sources for the insertion, as in the prior art wherein rotary tools are used, which require a drill for the insertion.

Other advantages of the present invention are obtained by means of an entrainment device according to the dependant claims. In particular, the present invention advantageously allows the use of a single device for the insertion, injection or infusion of fluids into the plant, the device being provided with internal conduits for the flow of said fluids.

### Brief description of the drawings

Further characteristics and advantages of the present invention will become clearer from the following detailed description of a preferred, but non-exclusive embodiment, illustrated by way of a non-exhaustive example, with reference to the accompanying drawings, wherein:
- figures 1 a and 1b are two representations of respective portions of tree subjected to insertion on the part of two respective known tools,
- figure 2 is a representation of a portion of an tree subjected to insertion on the part of tool for insertion according to this invention,
- figure 3 is a side view of a tool for insertion into trees according to the present invention,
- figure 4 is a front view of the tool of figure 3,
- figure 5 is a plan view of the tool of figure 3,
- figure 6 is a section view of the tool of figure 3, according to VI-VI line section of figure 5,
- figure 7 is a front, section view of the tool of figure 3, in one operational configuration thereof,
- figure 8 is a side view of a tool for infusion or injection into trees according to the present invention.

### Detailed description of the invention

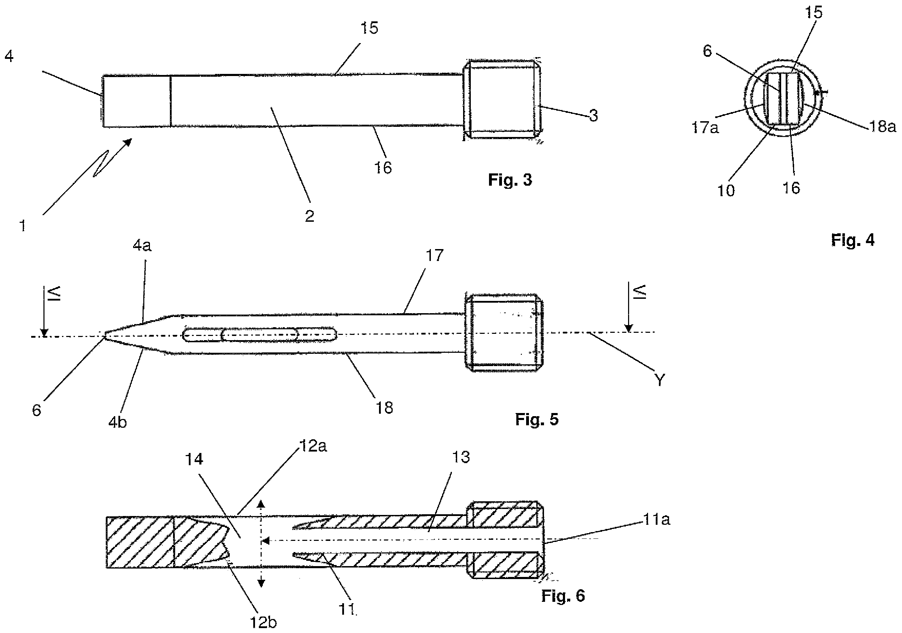

With reference to the accompanying figures 3-6, a tool for insertion into trees according to the present invention is overall indicated with 1.

The tool 1 comprises a first proximal end 3 and a second distal end 4 between which there is defined a longitudinal axis Y of the tool 1.

The tool 1 further comprises an elongated body 2, axially extended along the longitudinal axis Y, between the first and the second end 3, 4. The body 2 is provided with section 10 that is transversal to the longitudinal axis Y, having a biconvex lenticular shape.

The second distal end 4 is of the cuneiform type being provided with two sides 4a, b between which there is defined a linear edge 6 that can be used to promote the insertion of the tool 1 into a trunk of an tree A, between the fibres thereof. The edge 6 is linearly extended in a direction almost orthogonal to the longitudinal axis Y of the body 2, so as to define a median plane Y6, comprising the longitudinal axis Y and the linear edge 6, of symmetry for the tool 1. The sides 4a, b are arranged symmetrically with respect to the median plane Y6.

The body 2 of the tool 1 and in particular its cross-section 10 are also symmetrical with respect to the median plane Y6. The body 2 comprises two flat opposite bases 15, 16, extended along the longitudinal axis Y of the first and second end 3, 4 of the tool 1 and almost orthogonal to the edge 6. The body 2 also comprises two opposite convex sides 17, 18 that are symmetrical with respect to the median plane Y6 of symmetry. In a direction parallel to the edge 6, each of the convex sides 17, 18 is extended from one to the other of the opposite flat bases 15, 16. In a direction parallel to the longitudinal axis Y, the sided 17, 18 are respectively extended between the first proximal end 3 and the sides 4a, b of the second distal end.

In the example embodiment of the accompanying figures, the convex sides 17, 18 have respective elliptic profiles 17a, 18a in the cross-section 10. In general, according to the variant embodiments, convex sides 17, 18 have profiles having a different shape, for example hyperbolic or anyhow convex, but other than a circular shape.

Given its shape, the tool 1 can be inserted into the tree A in an optimal way. For insertion, it is necessary to bring the tool 1 up to the tree A with an edge 6 arranged in parallel to the fibres of the plant and to apply a thrust force parallel to the longitudinal axis Y and directed at the proximal end 3 of the distal end 4, which promotes the insertion of the tool 1, by means of the initial separation and flow of the fibres along the sides 4a, b. Subsequently the fibres of the tree A flow along the convex sides 17, 18, which allow a uniform distribution of the resistant forces along the respective profiles 17a, 18a, while envisaging or anyhow keeping to a minimum the rupture of the plant's vessels. Following extraction of the tool 1, the cavity generated between the fibres is easily and quickly filled by the cicatricial circuit D (figure 2) produced by the suber-phelloderm cambium and by the phloem-vascular cambium, contrary to that which takes place for the cylindrical cavities produced by rotary tools (figure 1b). The improvement produced by the present invention is particularly evident considering that the figures 1b and 2 represent an tree A, 30 days after the respective insertion of a known rotary tool and of the tool 1.

The tool 1 inserted into the tree A can also be conveniently used for the infusion or injection of fluids into the plant itself, being provided with a passage 11 obtained within the body 2. The passage 11 is in the form of the letter "T", arranged in parallel to the longitudinal T axis, and extended from one inlet mouth 11a, positioned at the first proximal end 3, to a pair of openings 12a, b respectively obtained on the opposite flat bases 15, 16. The passage 11 comprises a first and a second conduit 13, 14 that communicate one to the other and are orthogonally arranged. The first conduit 13 is arranged in parallel to the longitudinal axis Y and extends from the inlet mouth 11a to the second conduit 14, which is orthogonal to the longitudinal axis Y and extends between the pair of openings 12a,b. The second conduit 14 is distanced from the second distal end 4 in such a way that the pair of openings 12a, b are not obstructed by ligneous parts removed from the plant during the insertion phase of the tool 1.

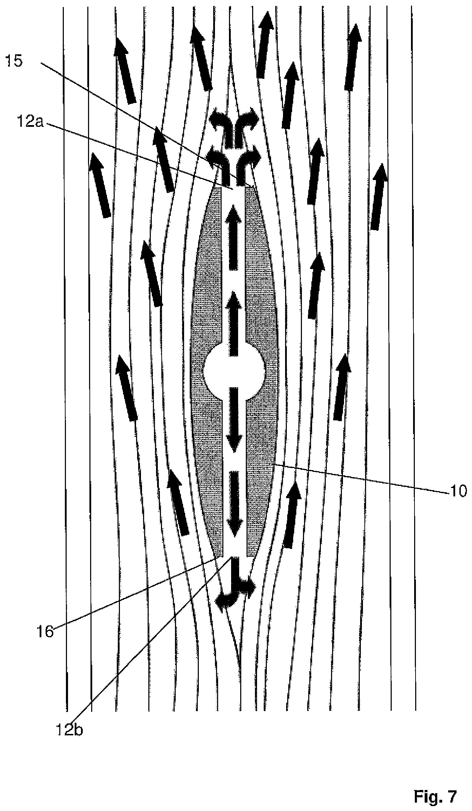

Figure 7 shows the tool 1 inserted into the tree A, in one operational configuration thereof. The tool is arranged in such a way that the sap flows along the convex sides 17, 18 according to a flow oriented from the flat base 15 to the flat base 16. The compression induced by the tool 1 along the convex sides 17, 18 has the effect of reducing the flow section of the lymphatic vessels, generating by means of the Venturi effect an increase in the speed of the lymphatic flow that facilitates the spontaneous absorption of the fluid introduced into the plant. In particular, at the flat base 15, more upstream of the lymphatic flow, there is induced a zone of greater depression that permits the active absorption of the outlet fluid from the corresponding opening 12a.

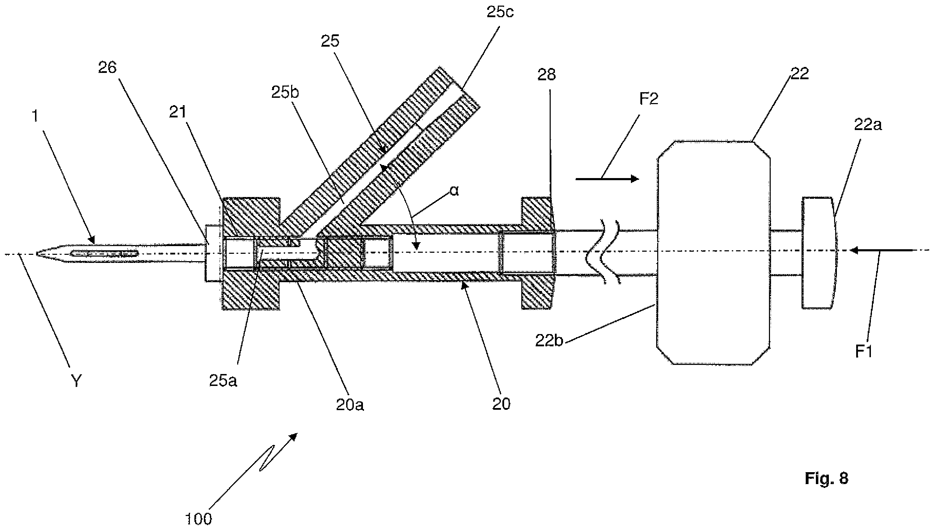

With reference to figure 8, a device for the injection or infusion of fluids into trees is overall indicated by 100 and comprises the tool 1 and a striker 20 comprising a second body 20a in which there is obtained a housing 21 for the first end 3 of the tool 1. The coupling of the housing 21 and the first end 3 of the tool 1 is of the treaded type. For the screwing into the housing 21, the first end 3 of the tool 1 is conveniently shaped in accordance with a square cross section that is easily coupled with a conventional spanner. According to the invention, an impermeable seal 26 is fitted onto the tool 1 and arranged flush with the body 20a of the striker 20. The seal is susceptible to being placed between the bark of the tree A and the first end 3 when the body 2 of the tool 1 is completely inserted into the tree, so as to prevent that the fluid introduced into the plant from flowing along the bases 15, 16 and the sides 17, 18 and exiting the plant.

According to another variant embodiment of the invention (not represented), the tool 1 and the striker 20 are made in a single piece, for example by casting.

The striker 20, preferably made of stainless steel, further comprises a free head 22 that is coupled in removable fashion with the body 20a of the striker 20, by means of a threaded joint 28, arranged along the longitudinal axis Y, from a longitudinally opposite part in respect of the housing 21. The head 22 comprises a first and a second surface 22a, 22b, opposed one to the other, with the second surface facing the tool 1. The first surface 22a is susceptible to receiving a thrust force F1 parallel to the longitudinal axis Y and in the direction of the tool 1 to promote the insertion thereof into the tree A. The first surface 22b is susceptible to receiving a traction force F2 parallel to the longitudinal axis Y and in the direction opposite to the thrust force F1, so as to promote the extraction of the tool 1 of the tree A. The housing 21 for the first end 3 of the tool 1 and the head 22 are almost aligned with the longitudinal axis Y, so as to promote the alignment of the thrust and traction forces F1, F2 with the longitudinal axis Y. This allows the tool 1 to be correctly inserted and extracted in respect of the tree A, in accordance with directions oriented in parallel to the longitudinal axis Y.

The head 22 is also preferably made of stainless steel and has a greater cross section with respect to that of the end of the body 20a in which the threaded joint 28 is envisaged, so as to be able to easily receive the thrust and traction forces F1, F2 created through an external striker (not represented), for example consisting of a hammer.

By effect of the threaded joint 28, the head 22 can be separated from the body 20a of the striker 20 so that it may be used for multiple tools 1 and bodies 20a coupled one together.

According to another variant embodiment of the invention (not represented), the head 22 is integral to the striker 20, thus constituting together with said striker a single piece, formed by casting for example. Clearly, no threaded joint 28 is envisaged between the head 22 and the striker 20, as unnecessary in this variant. According to another variant embodiment of the invention (not represented), the head 22 comprises one free end of the body 20a of the striker 20. This variant can be used in particular in those cases in which it is not necessary to rely on an external striker to insert and extract the tool 1, for example for subcortical treatments wherein the tool is manually inserted in a direction tangential to the bark of the plant.

The second body 20a can also be used for the infusion or injection of a fluid into the tree A, being provided with a third internal conduit 25 that communicates with the first conduit 13 of the passage 11. The third conduit 25 comprises a first section 25a that is coaxial to the longitudinal axis Y and communicates with the first conduit 13 thanks to the coupling of the housing 21 and the first proximal end 3 of the tool 1. The third conduit 25 comprises a second section 25b, adjacent to the first section 25a and inclined by an angle α, of typically between 35° and 45°, with respect to the longitudinal axis Y. The second section 25b comprises an open end 25c to allow the introduction of a fluid into the tree A, for example consisting of a pesticidal.

The fluid can be provided by infusion by connecting to the end 25c, a tank of fluid at atmospheric pressure, in itself known and conventional.

Alternatively, the fluid can be provided by injection by connecting to the end 25c, a device for the injection of fluid at a pressure greater than the atmospheric pressure, for example comprising a syringe, a pump or a compressor.

The described technical solutions allow the set aims and objects to be achieved with reference to the cited prior art, achieving as a further advantage, the fact of making the introduction into the plant of products, for example pesticidal products, particularly effective. This is in particular determined by the fact that the openings 12a,b are distanced from the distal end 4 of the tool 1 in such a way as not to be obstructed during the insertion of the tool 1.

## Claims

1. A device (100) for injecting or infusing fluids into trees comprising a tool (1) for insertion into trees comprising a first proximal end (3), a second distal end (4) and a body (2) axially extending between said first and second end (3, 4), said second distal end (4) being of cuneiform type provided with a linear edge (6) to favour the insertion of said tool (1) into a trunk of tree (A), said edge (6) being linearly extended in almost orthogonal direction to a longitudinal axis (Y) of said body (2), said body (2) being provided with a cross section (10) having biconvex lenticular shape; a passage (11) for a fluid to be injected or infused into said tree (A) being obtained in said body (2), said passage (11) extending from said first proximal end (3), and at least one opening (12a, b) obtained along said body (2); the device (100) also comprising a striker (20) comprising a housing (21) for said first proximal end (3) and a free head (22) susceptible to receiving a thrust or traction force for favouring the insertion of said tool (1) into a trunk of a tree (A) or extracting said tool (1) from said tree (A), respectively, said housing (21) and head (22) being almost aligned with said longitudinal axis (Y), said device (100) comprising an impermeable seal (26), fitted onto the tool (1) and arranged flush with the housing (21) of the striker (20), **characterized in that** said impermeable seal (26) is placed between a bark of the tree and said first end (3) when the body (2) of the tool (1) is completely inserted into the tree.

2. A device (100) according to claim 1, wherein said body (2) is symmetrical with respect to a plane of symmetry (Y6) comprising said longitudinal axis (Y) and said edge (6).

3. A device (100) according to any of the previous claims, wherein said passage (11) comprises a first conduit (13) extending from said first proximal end (3) to a second conduit (14) communicating with said first conduit (13), said second conduit (14) being transversal with respect to said longitudinal axis (Y) and extending between a pair of openings (12a, b) obtained along said body (2), said openings (12a, b) being distanced from said second distal end (4).

4. A device (100) according to any of the previous claims, wherein said body (2) comprises two flat opposite bases (15, 16) extending along said longitudinal axis (Y) between said first and second end (3, 4), said bases (15, 16) being almost orthogonal to said edge (6), said pair of openings (12a, b) being respectively obtained on said opposite bases (15, 16).

5. A device (100) according to claim 4, wherein said body (2) comprises two opposite convex sides (17, 18) which are symmetrical with respect to said plane of symmetry (Y6), each of said sides (17, 18) extending from one to the other of said opposite bases (15, 16).

6. A device (100) according to claim 5, wherein said convex sides (17, 18) have respective elliptic profiles (17a, 18a) in said cross section (10).

7. A device (100) according to any of the previous claims, wherein said striker (20) comprises a third conduit (25) for said fluid to be injected or infused, said third conduit (25) communicating with said first conduit (13).

8. A device (100) according to any of the previous claims, wherein said third conduit (25) is inclined with respect to said longitudinal axis (Y).

## Patentansprüche

1. Vorrichtung (100) zum Einspritzen oder Einleiten von Flüssigkeiten in Bäume aufweisend ein Arbeitsgerät (1) zum Einsetzen in Bäume, welches ein erstes proximales Ende (3), ein zweites distales Ende (4) und einen Körper (2) aufweist, der sich zwischen dem ersten und dem zweiten Ende (3, 4) erstreckt, wobei das zweite distale Ende (4) keilförmig und mit einer linearen Kante (6) versehen ist, um das Einsetzen des Arbeitsgerätes (1) in einen Stamm eines Baumes (A) zu erleichtern, wobei die Spitze (6) sich im Wesentlichen in senkrechter Richtung zu einer Längsachse (Y) des Körpers (2) linear erstreckt, wobei der Körper (2) einen Querschnitt (10) aufweist, der eine bikonvexe Linsenform zeigt, und ein Durchgang (11) für eine in dem Baum (A) einzuspritzende oder einzuleitende Flüssigkeit in dem Körper (2) erhalten wird, wobei der Durchgang (11) sich von dem ersten Ende (3) erstreckt und zumindest eine Öffnung (12a, b) längs des Körpers (2) erhalten wird, wobei die Vorrichtung (100) weiter eine Eintreibvorrichtung (20) aufweist, die ein Gehäuse (21) für das erste proximale Ende (3) und einen freien Kopf (22) aufweist, der ausgelegt ist, eine Druck- oder Zugkraft zum Erleichtern des Einsetzens des Arbeitsgerätes (1) in einem Stamm eines Baumes bzw. zum Extrahieren des Arbeitsgerätes (1) aus dem Baum (A), wobei das Gehäuse (21) und der Kopf (22) im Wesentlichen zur Längsachse (Y) ausgerichtet sind, und wobei die Vorrichtung (100) eine undurchlässige Dichtung (26) aufweist, die auf dem Arbeitsgerät (1) befestigt ist und fluchtend mit dem Gehäuse (21) auf der Eintreibvorrichtung (20) angeordnet ist, **dadurch gekennzeichnet, dass** die undurchlässige Dichtung (26) zwischen der Rinde des Baumes und dem ersten Ende (3) angeordnet ist, wenn der Körper (2) des Arbeitsgerätes (1) komplett in den Baum eingesetzt ist.

2. Vorrichtung (100) nach Anspruch 1, wobei der Körper (2) symmetrisch bezüglich einer Symmetrieebene (Y6) ist, die die Längsachse (Y) und die Spitze (6) aufweist.

3. Vorrichtung (100) nach einem der vorangegangenen Ansprüche, wobei der Durchgang (11) einen ersten Kanal (13) aufweist, der von dem ersten proximalen Ende (3) zu einem zweiten Kanal (14) führt, und der mit dem ersten Kanal (13) kommuniziert, wobei der zweite Kanal (14) schräg zur Längsachse (Y) verläuft und sich zwischen einem Paar Öffnungen (12a, b), die längs des Körpers (2) erhalten werden, erstreckt, wobei die Öffnungen (12a, b) von dem zweiten distalen Ende (4) beabstandet sind.

4. Vorrichtung (100) nach einem der vorangegangenen Ansprüche, wobei der Körper (2) zwei flache gegenüberliegende Basen (15, 16) aufweist, die sich längs der Längsachse (Y) zwischen dem ersten und dem zweiten Ende (3, 4) erstrecken, wobei die Basen (15, 16) im Wesentlichen senkrecht zur Spitze (6) sind, wobei das Paar der Öffnungen (12a, b) entsprechend auf diesen gegenüberliegenden Basen (15, 16) erhalten werden.

5. Vorrichtung (100) nach Anspruch 4, wobei der Körper (2) zwei gegenüberliegende konvexe Seiten (17, 18) aufweist, die symmetrisch bezüglich der Symmetrieebene (Y6) sind, wobei jede Seite (17, 18) sich von der anderen der gegenüberliegenden Basen (15, 16) erstreckt.

6. Vorrichtung (100) nach Anspruch 5, wobei die konvexen Seiten (17, 18) entsprechend elliptische Profile (17a, 18a) im Querschnitt (10) aufweisen.

7. Vorrichtung (100) nach einem der vorangegangenen Ansprüche, wobei die Eintreibvorrichtung (20) einen dritten Kanal (25) für das einzuspritzende oder einzuleitende Fluid aufweist, wobei der dritte Kanal (25) mit dem ersten Kanal (13) kommuniziert.

8. Vorrichtung (100) nach einem der vorangegangenen Ansprüche, wobei der dritte Kanal (25) bezüglich der Längsachse (Y) geneigt ist.

## Revendications

1. Dispositif (100) pour injecter ou infuser des fluides dans des arbres comprenant un outil (1) pour une insertion dans des arbres comprenant une première extrémité proximale (3), une seconde extrémité distale (4) et un corps (2) s'étendant axialement entre lesdites première et seconde extrémités (3, 4), ladite seconde extrémité distale (4) étant du type cunéiforme doté d'un bord linéaire (6) pour favoriser l'insertion dudit outil (1) dans un tronc d'arbre (A), ledit bord (6) étant étendu linéairement dans une direction presque orthogonale à un axe longitudinal (Y) dudit corps (2), ledit corps (2) étant doté d'une section transversale (10) ayant une forme lenticulaire biconvexe ; un passage (11) pour un fluide à injecter ou infuser dans ledit arbre (A) étant obtenu dans ledit corps (2), ledit passage (11) s'étendant à partir de ladite première extrémité proximale (3), et au moins une ouverture (12a, b) obtenue le long dudit corps (2); le dispositif (100) comprenant également un percuteur (20) comprenant un logement (21) pour ladite première extrémité proximale (3) et une tête libre (22) susceptible de recevoir une force de poussée ou de traction pour favoriser l'insertion dudit outil (1) dans un tronc d'un arbre (A) ou extraire ledit outil (1) dudit arbre (A), respectivement, ledit logement (21) et ladite tête (22) étant presque alignés avec ledit axe longitudinal (Y), ledit dispositif (100) comprenant un joint imperméable (26), ajusté sur l'outil (1) et agencé en affleurement avec le logement (21) du percuteur (20), **caractérisé en ce que** ledit joint imperméable (26) est placé entre une écorce de l'arbre et ladite première extrémité (3) lorsque le corps (2) de l'outil (1) est complètement inséré dans l'arbre.

2. Dispositif (100) selon la revendication 1, dans lequel ledit corps (2) est symétrique par rapport à un plan de symétrie (Y6) comprenant ledit axe longitudinal (Y) et ledit bord (6).

3. Dispositif (100) selon l'une quelconque des revendications précédentes, dans lequel ledit passage (11) comprend un premier conduit (13) s'étendant à partir de ladite première extrémité proximale (3) vers un deuxième conduit (14) communiquant avec ledit premier conduit (13), ledit deuxième conduit (14) étant transversal par rapport audit axe longitudinal (Y) et s'étendant entre une paire d'ouvertures (12a, b) obtenues le long dudit corps (2), lesdites ouvertures (12a, b) étant à distance de ladite seconde extrémité distale (4).

4. Dispositif (100) selon l'une quelconque des revendications précédentes, dans lequel ledit corps (2) comprend deux bases opposées plates (15, 16) s'étendant le long dudit axe longitudinal (Y) entre lesdites première et seconde extrémités (3, 4), lesdites bases (15, 16) étant presque orthogonales audit bord (6), ladite paire d'ouvertures (12a, b) étant obtenues respectivement sur lesdites bases opposées (15, 16).

5. Dispositif (100) selon la revendication 4, dans lequel ledit corps (2) comprend deux côtés convexes opposés (17, 18) qui sont symétriques par rapport audit plan de symétrie (Y6), chacun desdits côtés (17, 18) s'étendant de l'une à l'autre desdites bases opposées (15, 16).

6. Dispositif (100) selon la revendication 5, dans lequel lesdits côtés convexes (17, 18) ont des profils elliptiques respectifs (17a, 18a) dans ladite section transversale (10).

7. Dispositif (100) selon l'une quelconque des revendications précédentes, ledit percuteur (20) comprend un troisième conduit (25) pour ledit fluide à injecter ou à infuser, ledit troisième conduit (25) communiquant avec ledit premier conduit (13).

8. Dispositif (100) selon l'une quelconque des revendications précédentes, dans lequel ledit troisième conduit (25) est incliné par rapport audit axe longitudinal (Y).
